# NEUE EUROPÄISCHE PATENTSCHRIFT

(11) **EP 3 078 880 B2**
(45) Veröffentlichungstag und Bekanntmachung des Hinweises auf die Entscheidung über den Einspruch: **23.03.2022**
(45) Hinweis auf die Patenterteilung: 26.06.2019
(21) Anmeldenummer: 15162936.7
(22) Anmeldetag: 09.04.2015
(51) Int. Cl.: F16G 3/06, F16G 3/08

(54) **RIEMEN ALS ENDLOSES ZUGMITTEL FÜR FÖRDERBÄNDER LANDWIRTSCHAFTLICHER MASCHINEN**
BELT AS ENDLESS TRACTION MECHANISM FOR CONVEYOR BELTS OF AGRICULTURAL MACHINES
COURROIE SERVANT DE MOYEN DE TRACTION SANS FIN POUR DES BANDES DE TRANSPORT DE MACHINES AGRICOLES

(43) Veröffentlichungstag der Anmeldung: 12.10.2016
(73) Patentinhaber: Arnold Jäger Holding GmbH, 30625 Hannover (DE)
(72) Erfinder: Jäger, Sebastian, 30657 Hannover (DE); Schmidt, Nick, 31275 Lehrte (DE)
(74) Vertreter: Bremer, Ulrich

(56) Entgegenhaltungen:
- EP-A2- 0 221 818
- GB-A- 127 470
- US-A- 138 194
- US-A- 2 446 311
- US-A- 2 852 826

## Beschreibung

Die vorliegende Erfindung betrifft einen Riemen als endloses Zugmittel für Förderbänder landwirtschaftlicher Maschinen, wobei der Riemen aus einem durch Gewebelagen verstärkten Polymer besteht und auf seiner Innenseite mit Antriebsnocken versehen ist.

Förderbänder für landwirtschaftliche Maschinen weisen meist zwei oder mehr parallel zueinander angeordnete derartige Riemen auf, die häufig durch Querelemente, z. B. Stäbe, miteinander verbunden sind. Diese Riemen müssen für ihren Einsatz in endloser Form vorliegen. Zur Herstellung einer derartigen endlosen Form sind aus dem Stand der Technik verschiedene Vorgehensweisen bekannt.

So ist es aus der DE 100 37 640 A1 bekannt, die beiden Enden eines Riemens kammerartig zu verzahnen und die Verzahnungsbereiche zum Endlosmachen des Riemens ineinanderzuschieben und nach zu vulkanisieren.

In der DE 297 16 331 U1 und der DE 10 2006 022 011 B3 erfolgt das Endlosmachen eines als Nockenriemen ausgeführten Zugmittels durch ein Riemenschloss. Derartige Riemenschlösser werden in verschiedenen Ausführungsformen häufig zum Endlosmachen von Zugmitteln für Förderbänder von landwirtschaftlichen Maschinen eingesetzt.

In der DE 10 2011 116 633 A1 ist ein aus einem gewebelagenverstärkten Polymer hergestellter Flachriemen bekannt. Das Endlosmachen dieses Riemens erfolgt dadurch, dass er an beiden Enden über die gesamte Breite mehrfach abgestuft ist. Dadurch ergibt sich ein Überlappungsbereich, in dem ein äußeres Riemenende und ein inneres Riemenende überlappend aufeinander liegen. Der Riemen besitzt auf seiner Unterseite in gleichmäßigen Abständen angeordnete, sich quer zur Längsrichtung erstreckenden Nuten, die im Überlappungsbereich der Aufnahme von Ankerplatten dienen. Jede Ankerplatte weist zwei angeschweißte und voneinander beabstandete Schraubenbolzen auf. Bei aufeinandergelegten inneren Riemenende und äußeren Riemenende durchragen diese Schraubenbolzen im äußeren Riemenende und im inneren Riemenende vorgesehene, miteinander fluchtende Löcher. Auf die aus dem Riemen herausragenden Enden der Schraubenbolzen werden Muttern aufgedreht und fest angezogen, wodurch das äußere Riemenende und das innere Riemenende zur Übertragung von Zugkräften fest aneinander gepresst werden. Um an der Verbindungsstelle die Zugfestigkeit noch zu verbessern, sind in einem Ausführungsbeispiel im Überlappungsbereich am inneren Riemenende und am äußeren Riemenende aufvulkanisierte Zahnungselemente vorgesehen, die bei hergestellter Verbindung zwischen dem inneren Riemenende und dem äußeren Riemenende formschlüssig ineinandergreifen.

Der aus der DE 10 2011 116 633 A1 bekannte Riemen weist im Überlappungsbereich eine hohe statische und dynamische Festigkeit auf. Das wird unter anderem dadurch erreicht, dass der Überlappungsbereich relativ lang ist, wodurch sich allerdings die Biegeflexibilität des Riemens, wie sie in den Umlenkbereichen erforderlich ist, verschlechtert.

In der DE 102009 036 104 A1 ist ein Schrägförderer für Mähdrescher offenbart, der mindestens zwei Nockenriemen aufweist, die durch Mitnehmerleisten miteinander verbunden sind. Die Befestigung der Mitnehmerleisten an den Riemen erfolgt durch eine Schraubverbindung. Dazu sind jeweils die Köpfe zweier Schraubenbolzen mit einer Ankerplatte in einen Nocken einvulkanisiert. Auf die auf der anderen Seite aus dem Riemen heraus ragenden Enden der Schraubenbolzen werden dann die an dieser Stelle mit Löchern versehenen Mitnehmerleisten aufgesetzt und anschließend durch Aufschrauben von Muttern an den Riemen befestigt. Dadurch, dass die Schraubenköpfe und die Ankerplatten in die Nocken eingebettet sind, ist dieser Teil der Schraubverbindung zum einen vor Verschleiß geschützt. Zum anderen wird dadurch an den Antriebsrädern und Umlenkrädern der Lärm reduziert, da nicht Metall auf Metall läuft.

In der EP 221 818 A2 ist ein Riemen als endloses Zugmittel offenbart, der für Förderbänder landwirtschaftlicher Maschinen geeignet ist und aus einem durch Gewebelagen verstärkten Polymer besteht, wobei mindestens eine Gewebelage jedes Riemenendes auf sich selbst zurückgeschlagen eine Verdickung umschlingt und derart zwischen der Verdickung und einem ein Widerlager zur Verdickung bildenden Anschlag verläuft, dass sie sich bei in Rückschlagrichtung auf den Riemen wirkenden Zug zwischen der Verdickung und dem Anschlag verklemmt.

Die GB 127,470 A offenbart einen Riemen als endloses Zugmittel für Förderbänder landwirtschaftlicher Maschinen, wobei der Riemen aus einem durch Gewebelagen verstärkten Polymer besteht und mindestens eine Lage jedes Riemenendes auf sich selbst zurückgeschlagen eine Verdickung umschlingt und derart zwischen der Verdickung und einem ein Wiederlager zur Verdickung bildenden Anschlag verläuft, dass sie sich bei in Rückschlagrichtung auf den Riemen wirkenden Zug zwischen der Verdickung und dem Anschlag verklemmt. Dabei sind die von der mindestens einen Gewebelage umschlungenen Verdickungen in einen von einer auf der Außenseite des Riemens angeordneten ersten Halbschale und einer zweiten auf der Innenseite des Riemens angeordneten Halbschale gebildeten Käfig eingelegt.

Aufgabe der vorliegenden Erfindung ist es, einen Riemen zur Verfügung zu stellen, der an der Verbindungsstelle eine hohe statische und dynamische Festigkeit aufweist, gepaart mit einer großen Biegeflexibilität, und auf seiner Innenseite mit Antriebsnocken versehen ist.

Diese Aufgabe wird mit einem Riemen gelöst, der die Merkmale des Anspruchs 1 aufweist.

Bei einem erfindungsgemäßen, endlosen Riemen kann die Verbindungsstelle, bezogen auf die Riemenlängsrichtung, sehr kurz ausgeführt werden, da ihre diesbezügliche Dimensionierung nur von den relativ geringen Querabmessungen der nebeneinander angeordneten beiden Verdickungen und der diesen zugeordneten Anschläge bestimmt ist. Dadurch besitzt der endlos gemachte Riemen an seiner Verbindungsstelle eine große Biegeflexibilität, die sich positiv auf das Laufverhalten des Riemens an Umlenkstellen auswirkt. Trotz der kurzen Verbindungsstelle können sehr hohe Zugkräfte übertragen werden, da die mindestens eine Gewebelage, die Verdickung die sie umschlingt, beim Spannen des Riemens gegen den zugeordneten Anschlag zieht, wodurch die mindestens eine Gewebelage zwischen der Verdickung und dem Anschlag geklemmt wird. Dabei ist die Klemmwirkung auf die Gewebelage desto höher je höher die auf den Riemen wirkende Zugkraft ist.

Die Verdickungen sind in einem Käfig angeordnet, der von einer ersten und einer zweiten Halbschale gebildet ist, wobei die erste Halbschale auf der Außenseite und die zweite Halbschale auf der Innenseite des Riemens angeordnet ist. Der Käfig kann einstückig ausgeführt sein, wobei dann die beiden Halbschalen an einer Stirnseite des Käfigs offen und an der anderen Stirnseite geschlossen sind. Er kann aber auch zweistückig sein, wobei dann die beiden Halbschalen im montierten Zustand durch Verschraubung oder anderweitig so miteinander verbunden sind, dass sie bei Belastung durch Zug auf den Riemen nicht auseinander gedrückt werden können.

Da die Verbindungsstelle, wie oben schon erwähnt, in Längsrichtung des Riemens gesehen sehr kurz ausgeführt werden kann, wird der zweiten auf der Innenseite des Riemens angeordneten Halbschale erfindungsgemäß die Form eines Antriebsnockens gegeben, der in eine vorgegebene Teilung passt.

In weiterer Ausgestaltung der Erfindung kann die erste Halbschale auf der Außenseite des Riemens kann aber auch durch das abgeflachte Ende eines zwei Riemen verbindenden Querstabes gebildet werden, wobei dann die beiden Riemen durch Befestigung des Querstabes endlos gemacht werden. Alternativ kann der ersten Halbschale auf der Außenseite des Riemens die Form eines abgeflachten Endes eines zwei Riemen verbindenden Querstabes gegeben werden, welches an einer Stirnseite einstückig mit einer Buchse versehen ist, in die bei der Montage des Förderbandes ein Ende eines Querstabes eingesteckt wird.

Als Verdickungen kommen Körper infrage, deren Materialeigenschaften derart sind, dass sie bei auf den Riemen wirkendem Zug entweder gar nicht komprimiert oder nur soweit komprimiert werden, dass auch noch ihr komprimiertes Maß ein Verklemmen der mindestens einen Gewebelage gewährleistet. Vorzugsweise kommen starre Stäbe zum Einsatz. Es können aber auch flexible Körper mit der oben angeführten Eigenschaft zur Anwendung kommen.

Vorteilhafte Weiterbildungen der Erfindung ergeben sich aus den übrigen abhängigen Ansprüchen.

Die Erfindung wird nachstehend anhand von Ausführungsbeispielen näher erläutert. In der dazu gehörigen Zeichnung zeigt:
- Fig. 1: eine Seitenansicht einer Verbindungsstelle eines endlos gemachten Riemens gemäß einer ersten Ausführungs-form der Erfindung,
- Fig. 2: eine Draufsicht auf die Darstellung gemäß Fig. 1,
- Fig. 3: einen perspektivischen Blick auf die Verbindungsstelle gemäß den Fig. 1 und 2,
- Fig. 4: einen Schnitt durch eine Verbindungsstelle gemäß einer zweiten Ausführungsform der Erfindung,
- Fig. 5: einen Schnitt durch eine Verbindungsstelle gemäß einer dritten Ausführungsform der Erfindung,
- Fig. 6: einen perspektivischen Blick auf eine Verbindungsstelle eines Riemens gemäß einer vierten Ausführungsform der Erfindung,
- Fig. 7: einen perspektivischen Blick auf einen für eine Verbindungsstelle vorgesehenen Käfig,

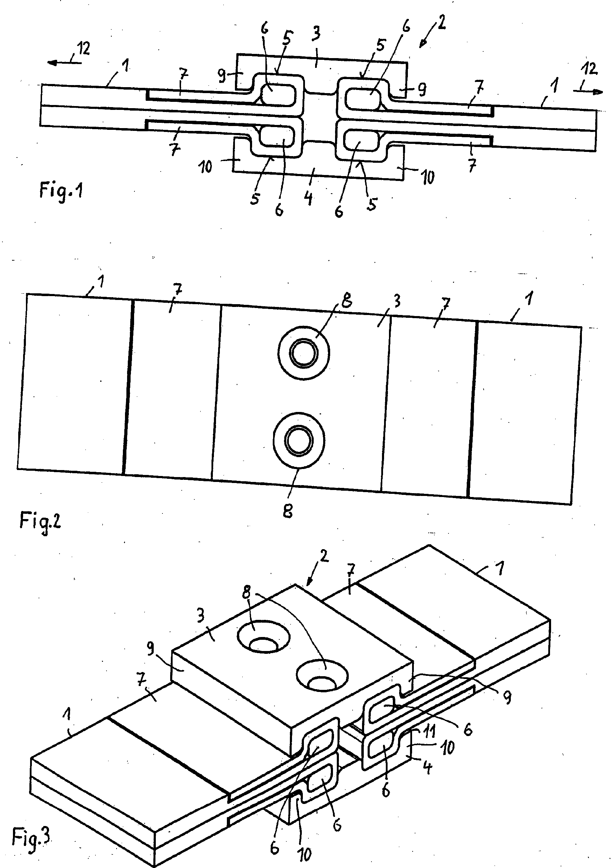

Bei dem in den Fig. 1 bis 3 dargestellten Ausführungsbeispiel kommt an der Verbindungsstelle eines Riemens 1 ein Käfig 2 aus Stahl zum Einsatz. Dieser Käfig 2 besteht aus einer auf der Außenseite des Riemens 1 angeordneten ersten Halbschale 3 und einer zweiten Halbschale 4, die auf der Innenseite des Riemens 1 angeordnet ist. Beide Halbschalen 3, 4 weisen rinnenartige Vertiefungen 5 auf, die der Aufnahme von Stahlstäben 6 dienen.

Der Riemen 1 besteht aus einem durch Gewebelagen 7 verstärktem Polymer, wobei die Gewebelagen 7 auf der Außenseite und der Innenseite des Riemens 1 durch eine Polymerschicht abgedeckt sind. Diese Polymerschichten werden zur Schaffung der Verbindungsstelle an beiden Riemen entfernt, so dass die Gewebelagen 7 hier freiliegen.

An jedem Riemenende wird auf der Außenseite und Innenseite des Riemens 1 jeweils mindestens eine Gewebelage 7 um einen Stab 6 aus Stahl gewickelt und auf sich selbst zurückgeschlagen, wie aus Fig. 1 deutlich hervorgeht. Die so umschlungenen Stäbe 6 werden anschließend in den Käfig 2 eingelegt. Anschließend werden die beiden Halbschalen 3, 4 mittels von zwei nicht dargestellten Schrauben miteinander verschraubt. Dazu sind in der ersten Halbschale 3 zwei Senklöcher 8 für die Schraubenköpfe und in der zweiten Halbschale 4 aus der Darstellung nicht ersichtliche Gewindebohrungen vorgesehen. Bei verschraubten Halbschalen 3, 4 verbleibt zwischen deren Seitenwänden 9 bzw. 10 ein Spalt 11 für den Durchtritt der auf sich selbst zurückgeschlagenen Gewebelagen 7. Wenn auf den Riemen 1 in Rückschlagrichtung (Pfeile 12 in Fig. 1) Zug ausgeübt wird, werden die Stäbe 6 mit den dazwischenliegenden Gewebelagen 7 gegen die als Anschläge wirkenden Seitenwände 9, 10 der Halbschalen 3 bzw. 4 gezogen, wodurch die Gewebelagen 7 zwischen den Stäben 6 und den Seitenwänden 9, 10 geklemmt werden.

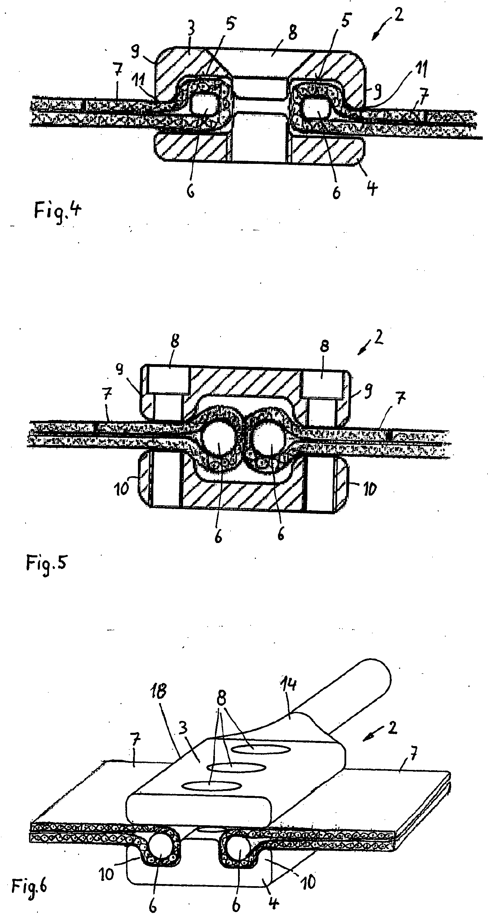

Das in Fig. 4 dargestellte Ausführungsbeispiel unterscheidet sich von dem vorstehend erläuterten lediglich dadurch, dass je Riemenende jeweils nur ein Stab 6 in den Käfig 2 eingelegt ist.

Obwohl die Stäbe 6 gemäß den Ausführungsbeispielen der Fig. 1 bis 4 mit einem viereckigen Querschnitt dargestellt sind, wird ein runder Querschnitt bevorzugt.

Bei dem Ausführungsbeispiel gemäß Fig. 5 ist je Riemenende ebenfalls jeweils nur ein Stab 6 in den Käfig 2 eingelegt. Hier erfolgt jedoch die Verschraubung der beiden Halbschalen 3, 4 nicht zwischen den Stäben 6, sondern jeweils im Bereich der auf sich selbst zurückgeschlagenen Gewebelagen 7.

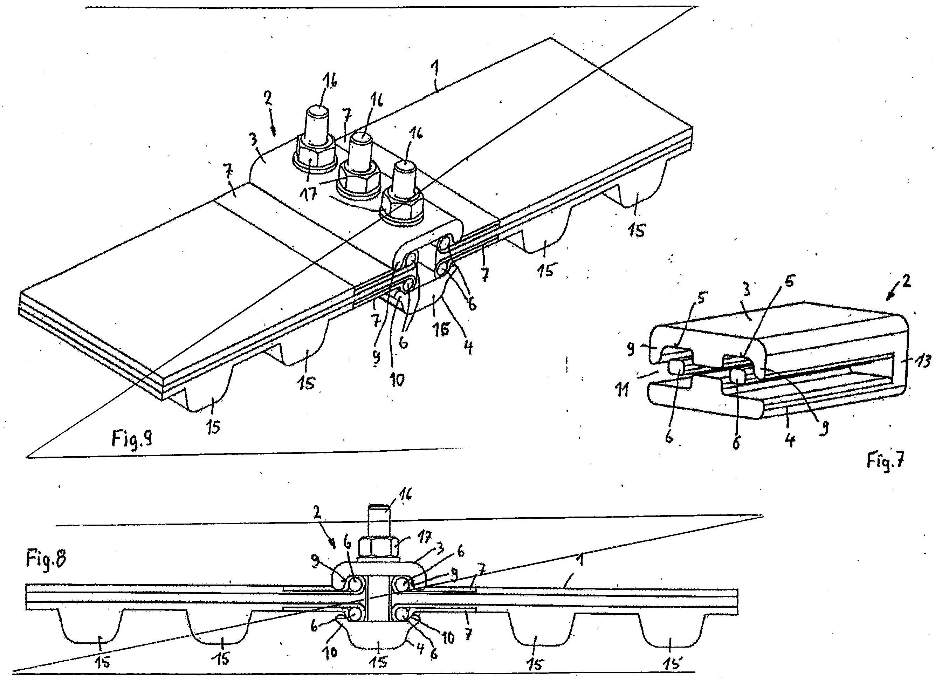

Bei den vorstehend beschriebenen Ausführungsbeispielen ist der Käfig 2 zweistückig ausgeführt, das heißt, die beiden Halbschalen 3, 4 sind zwei separate Bauteile. Der Käfig 2 kann aber auch einstückig sein, indem die beiden Halbschalen 3, 4 an einer Stirnseite durch einer Stirnwand 13 starr miteinander verbunden sind, während der Käfig 2 auf der gegenüber liegenden Stirnseite zum Einschieben der Stäbe 6 offen ist. Ein derartiger Käfig ist in Fig. 7 dargestellt. Eine Verschraubung der beiden Halbschalen 3, 4 kann dann entfallen.

Das in Fig. 6 gezeigte Ausführungsbeispiel entspricht im Wesentlichen dem Ausführungsbeispiel gemäß Fig. 4, wobei die beiden Halbschalen 3, 4 hier nicht nur der Verbindung der beiden Riemenenden dienen, sondern darüber hinaus weitere Funktionen übernehmen. So kann die auf der Innenseite des Riemens 1 angeordnete zweite Halbschale 4 die äußere Form eines Antriebsnockens haben. Die Halbschale 4 kann dadurch bei einem als Nockenriemen ausgeführten Riemen 1 gleichzeitig als ein in die Teilung passender Antriebsnocken dienen.

In diesem Ausführungsbeispiel hat die auf der Außenseite des Riemens 1 angeordnete erste Halbschale 3 darüber hinaus die Form eines abgeflachten Endes 18 eines zwei Riemen verbindenden Querstabes erhalten, welches an einer Stirnseite einstückig mit einer Buchse 14 versehen ist, die bei der Montage eines Förderbandes ein Ende eines Querstabes (ohne abgeflachte Enden) aufnehmen kann.

Die Stäbe 6 sind in allen Ausführungsbeispielen lose in die Gewebelagen 7 eingelegt und werden nur durch diese in Position gehalten. Alternativ können die Stäbe 6 auch in die Gewebelagen 7 einvulkanisiert sein.

## Patentansprüche

1. Riemen als endloses Zugmittel für Förderbänder landwirtschaftlicher Maschinen, wobei der Riemen aus einem durch Gewebelagen verstärkten Polymer besteht und auf seiner Innenseite mit Antriebsnocken (15) versehen ist, wobei mindestens eine Gewebelage (7) jedes Riemenendes auf sich selbst zurückgeschlagen eine Verdickung (6) umschlingt und derart zwischen der Verdickung (6) und einem ein Widerlager zur Verdickung (6) bildenden Anschlag (9, 10; 18) verläuft, dass sie sich bei in Rückschlagrichtung auf den Riemen wirkendem Zug zwischen der Verdickung (6) und dem Anschlag (9, 10; 18) verklemmt, wobei die Verdickungen (6) von der mindestens einen Gewebelage (7) umschlungen in einen von einer ersten auf der Außenseite des Riemens (1) angeordneten Halbschale (3) und einer zweiten auf der Innenseite des Riemens (1) angeordneten Halbschale (4) gebildeten Käfig (2) eingelegt sind, und entweder der Käfig (2) einstückig ausgeführt ist, wobei beide Halbschalen (3, 4) an einer Stirnseite des Käfigs (2) durch eine Stirnwand (19) starr einstückig miteinander verbunden sind während die gegenüber liegende Stirnseite des Käfigs (2) offen ist, oder der Käfig (2) zweistückig ausgeführt ist, wobei beide Halbschalen (3, 4) als Einzelteile ausgeführt sind und im montierten Zustand miteinander verschraubt sind, wobei in beiden in Längsrichtung des Riemens (1) weisenden Seitenwänden (9, 10) des Käfigs (2) ein Spalt (11) für den Durchtritt der mindestens einen auf sich selbst zurückgeschlagenen Gewebelage (7) angeordnet ist, und die Seitenwände (9, 10) den Anschlag für die jeweils benachbarte Verdickung (6) mit der dazwischenliegenden mindestens einen Gewebelage (7) bilden, und die zweite Halbschale (4) die Form eins Antriebsnockens (15) hat.

2. Riemen nach Anspruch 1, **dadurch gekennzeichnet, dass** die erste, auf der Außenseite des Riemens (1) angeordnete Halbschale (3) durch ein abgeflachtes Ende (18) eines zwei Riemen (1) verbindenden Querstabes gebildet ist.

3. Riemen nach einem der vorstehenden Ansprüche, **dadurch gekennzeichnet, dass** die Verdickung (6) durch einen flexiblen Körper gebildet ist, dessen Abmessungen derart sind, dass auch noch seine komprimierten Abmessungen ein Verklemmen der mindestens einen Gewebelage (7) gewährleisten.

4. Riemen nach einem der vorstehenden Ansprüche 1 bis 3, **dadurch gekennzeichnet, dass** die Verdickung (6) durch einen starren Stab gebildet ist.

5. Riemen nach Anspruch 4, **dadurch gekennzeichnet, dass** der Stab (6) lose in die Gewebelage (7) eingelegt ist und nur von dieser in Position gehalten wird.

6. Riemen nach Anspruch 5 , **dadurch gekennzeichnet, dass** der Stab (6) in die Gewebelage (7) einvulkanisiert ist.

## Claims

1. Belt as an endless traction mechanism for conveyor belts of agricultural machines, wherein the belt comprises a polymer reinforced by fabric layers and provided on its inner side with drive cams (15), wherein at least one fabric layer (7) of each end of the belt, which is folded back on itself, wraps around a thickened section (6) and extends between the thickened section (6) and a stop (9, 10, 18) forming an abutment to the thickened section (6), such that with a pull on the belt in the recoil direction, this clamps between the thickened section (6) and the stop (9, 10, 18), wherein the thickened sections (6) enclosed by the at least one fabric layer (7) are inserted into a cage (2) formed by a first half-shell (3) arranged on the outer side of the belt (1) and a second half-shell (4) arranged on the inner side of the belt (1), and either the cage (2) is constructed in one piece, wherein both half-shells (3, 4) are rigidly connected together integrally on one end face of the cage (2) by an end wall (19) while the opposite end face of the cage (2) is open, or else the cage (2) is designed in two pieces, wherein both half-shells (3, 4) are designed as individual parts and are screwed together in the assembled state, wherein in both side walls (9, 10) of the cage (2) facing in the longitudinal direction of the belt (1) a gap (11) is arranged for the passage of the at least one fabric layer (7) that is folded back on itself, and the side walls (9, 10) form the stop for the respective adjacent thickened section (6) with the intervening at least one fabric layer (7), and the second half-shell (4) takes the form of a drive cam (15).

2. Belt according to Claim 1, **characterised in that** the first half-shell (3) arranged on the outside of the belt (1) is formed by a flattened end (18) of a transverse bar connecting two belts (1).

3. Belt according to any one of the preceding claims, **characterised in that** the thickened section (6) is formed by a flexible body, the dimensions of which are such that even its compressed dimensions ensure clamping of the at least one fabric layer (7).

4. Belt according to any one of the preceding Claims 1 to 3, **characterised in that** the thickened section (6) is formed by a rigid rod.

5. Belt according to Claim 4, **characterised in that** the rod (6) is loosely inserted into the fabric layer (7) and is held in position only by this.

6. Belt according to Claim 5, **characterised in that** the rod (6) is vulcanised into the fabric layer (7).

## Revendications

1. Courroie servant de moyen de traction sans fin pour des bandes de transport de machines agricoles, la courroie étant constituée de polymère renforcé par des couches de tissu et pourvue de cames d'entraînement (15) sur sa face intérieure, au moins une couche de tissu (7) de chaque extrémité de courroie entourant un renflement (6) en état repliée sur elle-même et s'étendant entre le renflement (6) et une butée (9, 10, 18) formant un contre-appui par rapport au renflement (6) de telle sorte qu'elle se bloque entre le renflement (6) et la butée (9, 10, 18) lorsqu'une traction est exercée sur la courroie dans le sens du repli, les renflements (6), entourés par l'au moins une couche de tissu (7) étant insérés dans une cage (2) formée par une première demi-coque (3) disposée sur la face extérieure de la courroie (1) et par une seconde demi-coque (4) disposée sur la face intérieure de la courroie (1), et soit la cage (2) est conçue en une seule pièce, auquel cas les deux demi-coques (3, 4) sont reliées de manière rigide l'une à l'autre par une paroi de face (19) formant ainsi une seule pièce, au niveau d'une face avant de la cage (2), alors que l'autre face avant opposée de la cage (2) est ouverte, soit la cage (2) est conçue en deux pièces, auquel cas les deux demi-coques (3, 4) sont conçues en deux pièces et vissées l'une à l'autre en état monté, une fente (11) étant disposée dans les deux parois latérales (9, 10) de la cage (2) orientées dans le sens longitudinal de la courroie (1) pour le passage de l'au moins une couche de tissu (7) repliée sur elle-même, et les parois latérales (9, 10) formant la butée pour le renflement respectivement avoisinant (6) avec l'au moins une couche de tissu (7) entreposée, et la seconde demi-coque (4) ayant la forme d'une came d'entraînement (15).

2. Courroie suivant la revendication 1, **caractérisée en ce que** la première demi-coque (3) disposée sur la face extérieure de la courroie (1) est formée par une extrémité aplatie (18) d'une entretoise reliant deux courroies (1).

3. Courroie suivant une des revendications précédentes, **caractérisée en ce que** le renflement (6) est formé par un corps souple, dont les dimensions sont telles que même ses dimensions comprimées garantissent toujours un blocage de l'au moins une couche de tissu (7).

4. Courroie suivant une des revendications 1 à 3, **caractérisée en ce que** le renflement (6) est formé par une barre rigide.

5. Courroie suivant la revendication 4, **caractérisée en ce que** la barre (6) est insérée sans serrage dans la couche de tissu (7) et maintenue en position uniquement par celle-ci.

6. Courroie suivant la revendication 5, **caractérisée en ce que** la barre (6) est vulcanisée dans la couche de tissu (7).
